(19) Europäisches Patentamt
European Patent Office
Office européen des brevets

(11) Numéro de publication: **0 467 806 B1**

(12) **FASCICULE DE BREVET EUROPEEN**

(45) Date de publication du fascicule du brevet: **23.08.95**

(51) Int. Cl.⁶: **B01D 69/10**, B01D 71/02, C04B 35/52, C04B 38/00, C04B 41/50

(21) Numéro de dépôt: **91420252.8**

(22) Date de dépôt: **15.07.91**

(54) **Support poreux de membrane filtrante en composite carbone-carbone à substrat en mat de fibres de carbone et son procédé de fabrication.**

(30) Priorité: **17.07.90 FR 9009352**

(43) Date de publication de la demande:
**22.01.92 Bulletin 92/04**

(45) Mention de la délivrance du brevet:
**23.08.95 Bulletin 95/34**

(84) Etats contractants désignés:
**AT BE CH DE DK ES GB IT LI LU NL SE**

(56) Documents cités:
**EP-A- 0 208 629**
**EP-A- 0 252 339**
**DE-A- 2 722 575**
**GB-A- 2 003 845**
**US-A- 4 039 341**

(73) Titulaire: **LE CARBONE LORRAINE**
**Tour Manhattan - La Défense 2,**
**5-6, place de l'Iris,**
**F-92400 Courbevoie (FR)**

(72) Inventeur: **Fely, Daniel**
**6, rue Lénine**
**F-92230 Gennevilliers (FR)**
Inventeur: **Septier, Hélène**
**40, rue de la Cavalerie,**
**Bâtiment D**
**F-68000 Colmar (FR)**
Inventeur: **Moreau, Michel**
**7, rue Fournier**
**F-92110 Clichy (FR)**
Inventeur: **Maire, Jacques**
**10, rue du Jourdain**
**F-75020 Paris (FR)**

(74) Mandataire: **Séraphin, Léon et al**
**PECHINEY**
**28, rue de Bonnel**
**F-69433 Lyon Cedex 03 (FR)**

Rank Xerox (UK) Business Services
(3.10/3.09/3.3.3)

## Description

### DOMAINE DE L'INVENTION

L'invention concerne le domaine des éléments de filtration et est relatif, plus particulièrement, à un support destiné à recevoir une membrane pour techniques séparatives.

### RAPPEL DE L'ART ANTERIEUR

Dans les techniques séparatives, les procédés comme l'osmose inverse, l'ultrafiltration et la microfiltration ont recours, soit à des membranes organiques, soit depuis quelques années à des membranes minérales. Suivant le type d'utilisation, ces membranes doivent posséder des dimensions de pores faibles et appropriés à l'utilisation envisagée, une épaisseur minimale pour permettre une faible perte de charge à la filtration (perméabilité élevée). Enfin, dans le cas de membranes minérales, le support doit avoir des caractéristiques mécaniques élevées.

On connait déjà l'intérêt des matériaux composite carbone-carbone (C-C en abrégé) pour réaliser des supports de membrane de filtration permettant de satisfaire les exigences déjà mentionnées. En outre, ces supports en composite C-C présentent une grande inertie chimique qui se traduit par une absence de contamination du filtrat, et par une absence de corrosion du support, du moins dans les conditions usuelles d'utilisation.

Ainsi, le brevet français No 2 582 956, au nom de la demanderesse, décrit un support de membrane minérale, constitué d'un matériau composite C-C de faible épaisseur dans lequel le substrat fibreux est constitué de textile en carbone (fibres et/ou tissu et/ou feutre), éventuellement associé à un mat de fibres disposées aléatoirement. Un tel support en matériau composite présente, bien que de faible épaisseur, des caractéristiques mécaniques suffisantes, en particulier une résistance à l'éclatement, à l'écrasement et à la flexion dans le cas de tubes.

### POSITION DU PROBLEME

Les supports de membrane décrits dans le FR 2 582 956 présentent déjà des performances élevées, mais la demanderesse a observé qu'ils n'étaient pas adaptés comme supports de membranes minces à cause de l'irrégularité de leur surface : en effet, plus la membrane est mince, plus la surface du support en contact avec la membrane doit être régulière, sans rugosité et surtout sans gros défaut de surface, sinon il est difficile, voire impossible de déposer une membrane d'épaisseur régulière. En outre, les irrégularités de surface du support peuvent se transmettre, du moins en partie, à la surface de la membrane elle-même. De plus, si la surface de la membrane présente le moins d'aspérités possible et est la moins rugueuse possible, elle peut être nettoyée et décolmatée plus facilement. La demanderesse a donc poursuivi ses recherches pour résoudre ce problème et plus généralement pour mettre au point des supports de membrane permettant d'obtenir la perméabilité la plus élevée possible, et donc la vitesse de filtration la plus grande possible.

### DESCRIPTION DE LA SOLUTION

Selon l'invention, le support destiné à recevoir une membrane utilisable pour les techniques séparatives est constitué d'un matériau composite carbone-carbone, de faible épaisseur selon la direction Z de passage du flux à traiter, solide mécaniquement, d'une texture poreuse appropriée à la membrane, comprenant un substrat fibreux et une matrice carbonée poreuse, et caractérisé en ce que, de manière à augmenter la perméabilité et à réduire la rugosité de la face externe du support destinée à être en contact avec ladite membrane, le substrat fibreux est un mat de fibres de carbone, constitué de segments de fibres contenus dans un plan perpendiculaire à la direction Z de passage du flux à traiter et orientés aléatoirement dans ce plan, ces fibres occupant entre 15 et 55% du volume total, et en ce que la densité apparente finale du support de membrane est comprise entre 0,7 et 1,2. Une fraction du support destinée à être en contact avec ladite membrane peut contenir une dispersion de fine poudre inerte permettant d'ajuster le diamètre des pores de la face externe du support.

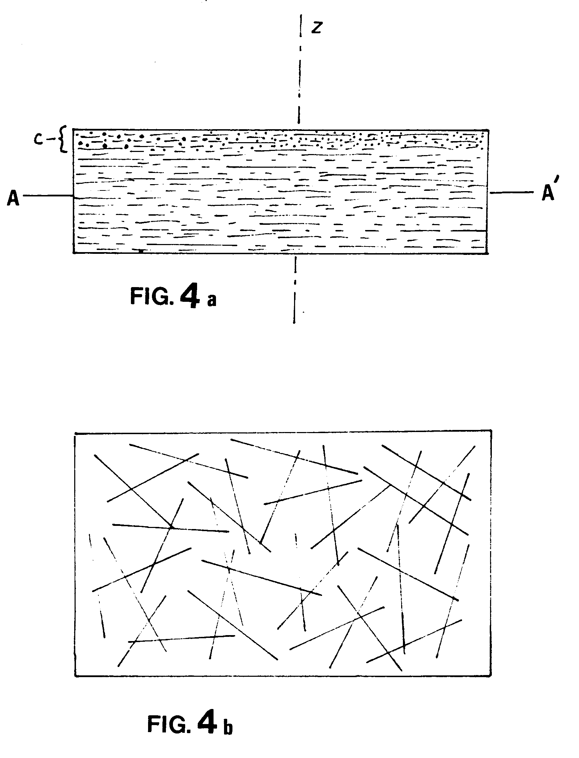

Un mat est une nappe non-tissée constituée d'une dispersion aléatoire de fibres de relativement faible longueur dans le plan. Il s'agit d'une orientation aléatoire bidimensionnelle de segments de fibres qui constitue un enchevêtrement liant les segments entre eux et permettant la manipulation de la nappe ainsi constituée. La figure 4b est une représentation schématique de cette orientation aléatoire dans un plan perpendiculaire à la direction Z de passage du flux à traiter.

A la suite de ses recherches, la demanderesse a observé qu'il était particulièrement avantageux d'utiliser comme substrat un renfort fibreux constitué seulement d'un mat de fibres de carbone ou d'un empilement de mats. En effet, un substrat seulement constitué de mat de fibres de carbone (fraction volumique comprise entre 15 et 55% et de préférence entre 25 et 45% du volume total) utilisé comme constituant d'un support de membrane ayant une densité apparente finale comprise entre 0,7 et 1,2, permet :

- d'une part, d'obtenir un support de caractéristiques mécaniques sensiblement comparables à celles obtenues avec un substrat comportant un tissu ou un feutre de fibres de carbone.
- d'autre part, d'améliorer la régularité de la surface du support, comparativement à un support dont le substrat de "surface" est un tissu ou un feutre.
- enfin et surtout, d'accroître dans de grandes proportions la perméabilité du support. On atteint jusqu'à 25 fois la perméabilité obtenue selon l'art antérieur, ce qui est considérable et du plus grand intérêt d'un point de vue pratique.

Selon l'invention, le substrat constitué de mat qui permet d'atteindre ces performances est obtenu de la manière suivante :

On part de mats en fibres de carbone ou, préférentiellement, de précurseur de carbone éventuellement à l'état réticulé. Ces mats de départ sont constitués d'enchevêtrements bidimensionnels de segments de fibres en carbone ou en précurseurs de carbone de longueur moyenne comprise entre 1 et 100 mm et de préférence comprise entre 20 et 80 mm. Leur masse surfacique est généralement comprise entre 50 et 300 g/m². Le mat peut être éventuellement aiguilleté.

On positionne le mat sur un support ayant la forme requise, rigide de préférence, et n'adhérant pas au mat et on empile éventuellement plusieurs couches de mat, le nombre de couches nécessaires en fonction notamment de l'épaisseur du support final. L'empilement des couches de mat est ensuite comprimé à froid sous une pression comprise entre 5 et 10 MPa, et porté à une température comprise entre 100 - 300°C pendant une durée comprise entre 1 et 50 heures pour figer la structure fibreuse. La densité apparente du substrat fibreux comprimé ainsi obtenu est comprise entre 0,2 et 0,6 et, de préférence voisine de 0,5.

Lorsqu'on part de mat de fibres en précurseur de carbone, on peut ensuite éventuellement réaliser une carbonisation entre 800 et 1200°C qui transformera le précurseur en fibre de carbone.

On densifie ensuite de manière connue le substrat fibreux obtenu précédemment et éventuellement carbonisé, soit par imprégnation et carbonisation d'une résine de préférence choisie pour laisser un taux de coke élevé par carbonisation, soit par dépôt chimique de carbone en phase vapeur, soit enfin par une combinaison de ces deux moyens. La densité finale du support poreux est comprise entre 0,7 et 1,2 et préférentiellement entre 0,8 et 1 de manière à avoir simultanément des caractéristiques mécaniques et une perméabilité suffisantes.

Selon l'invention, on peut incorporer des poudres fines aux mats lors de leur empilement. Ces poudres peuvent être constituées de fibres broyées en matériau inerte, notamment vis à vis du carbone (poudres de fibre de carbone, fibre de verre, carbure de silicium etc...), capables de modifier le diamètre des pores. En particulier, il est avantageux de modifier ainsi la couche externe de mat destinée à être en contact avec la membrane de manière à avoir, surtout dans le cas d'une membrane très mince, un support à surface très régulière et à porosité adaptée, et ceci sans réduire significativement la perméabilité du support puisque seule une faible épaisseur du support a été modifié. Par ailleurs, un support dont une face externe a été ainsi modifiée peut éventuellement être utilisé tel quel comme élément filtrant sans adjonction de membrane.

Ces poudres ont une taille particulaire moyenne comprise entre 0,1 et 10 μm et, dans la partie externe du support où elles sont présentes, elles occupent une fraction volumique comprise entre 1 et 20% du volume total et de préférence environ 5 % du volume total.

Bien que l'invention se prête particulièrement bien à la fabrication de support poreux de membrane filtrante sous forme de plaques planes, par compression à la presse à plateaux chauffés, il est possible selon l'invention d'obtenir un support de n'importe quelle forme, un tube par exemple, par compression isostatique sur un support de "forme" ayant la forme recherchée, le support de "forme" et sa couche de mat étant placés dans une enceinte souple et étanche, par exemple un sac plastique de préférence thermorétractable, stable thermiquement, la compression étant suivie d'un traitement thermique à 100-300°C puis du retrait de l'enceinte souple et éventuellement du support de "forme" avant densification selon les moyens déjà mentionnés.

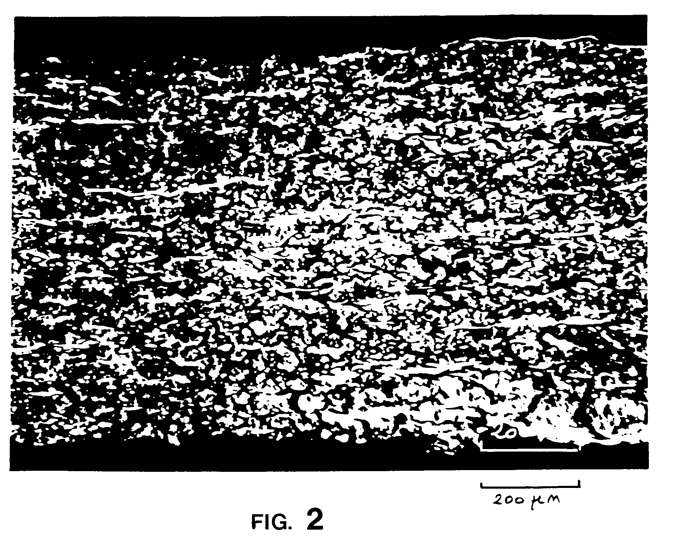

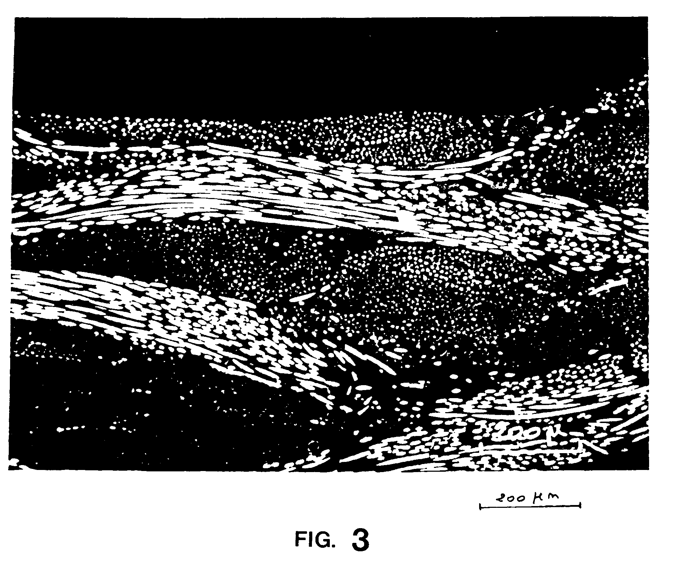

Les résultats obtenus selon l'invention sont particulièrement surprenants en ce qui concerne surtout la perméabilité, qui est 25 fois plus grande pour le support obtenu selon l'exemple 2 de l'invention que pour le support de l'exemple 3 obtenu selon l'art antérieur. Les raisons de cet état de fait ne sont pas clairement établies et, même en comparant les coupes micrographiques des supports obtenus à partir de mat (figure 2) et à partir de tissu (figure 3), on ne peut anticiper ces résultats.

DESCRIPTION DES FIGURES

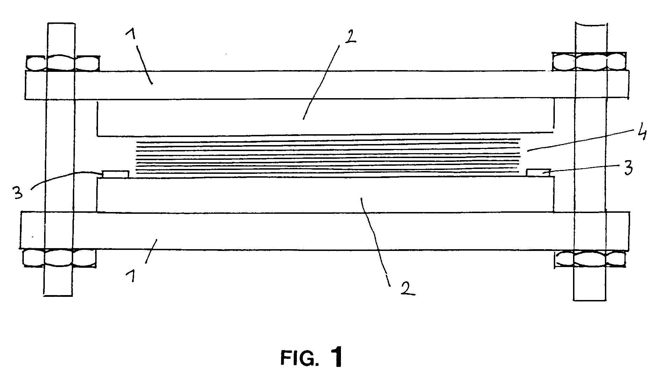

La figure 1 schématise en coupe transversale les plateaux d'une presse (1), l'un empilement de couches (4) de mat placé entre deux intercalaires en graphite (2) munis de cales d'épaisseur (3).

La figure 2 est une micrographie ( x 130 ) du support obtenu à l'exemple 2, en coupe transversale perpendiculairement au support.

La figure 3 est une micrographie ( x 130 ) du support obtenu à l'exemple 3, en coupe transversale perpendiculairement au support.

La figure 4a schématise un support avec comme substrat un mat constitué de segments de fibres sensiblement perpendiculaires à l'axe Z présentant une partie externe c chargée de fines poudres (vue en coupe selon l'axe Z perpendiculaire au support).

La figure 4b schématise une coupe du support de la figure 4a selon l'axe AA', perpendiculairement à l'axe Z, et illustre l'orientation aléatoire des segments de fibres de carbone.

EXEMPLES

Les exemples qui suivent illustrent l'invention :
- Les exemples 1 et 2 correspondent à l'invention.
- L'exemple 3 est un essai comparatif selon l'art antérieur.

Exemple 1

On part de mat de fibre en précurseur de carbone (fibre polyacrylonitrile à l'état réticulé) dont la masse surfacique est de 130 g/m². La longueur moyenne des fibres est de 63 mm.
La densité apparente est de 0,01.
On empile 10 couches de mat, soit une épaisseur de 13 mm et on comprime l'ensemble entre les deux plateaux métalliques (1) d'une presse munie d'intercalaires en graphite (2) jusqu'à une épaisseur de 1,5 mm (l'épaisseur est déterminée par les cales (3)). La densité apparente est alors de 0,5.
On porte l'empilement de mat comprimé à 250°C et on le maintient à cette température pendant 24 h pour figer la structure.

On carbonise ensuite le substrat ainsi obtenu en portant à 900°C le substrat ainsi que les deux intercalaires graphite de protection, la montée en température étant de 12,5°C/h.
On maintient 6 h en palier à 900°C.
Après refroidissement à la température ambiante, on sépare le substrat des intercalaires graphite. On obtient un substrat manipulable, quoique fragile.
On densifie le substrat par imprégnation d'une résine phénolique que l'on réticule et carbonise de manière connue. Après réticulation de la résine à 200°C, la densité apparente du support ainsi obtenu à ce stade est de 1,25 et sa perméabilité est comprise entre 30 et 60 cm³/cm².s.bar. Après carbonisation à 900 °C, on obtient un support de densité apparente de 0,86 et de perméabilité de 165 cm³/cm².s.bar et de diamètre poreux (diamètre de 1er pore) compris entre 32 et 34 $\mu$m.L'état de la surface a été caractérisé par sa rugosité :

$$R_T = 30 - 40 \ \mu m \ et \ R_A = 4 - 5 \ \mu m$$

Exemple 2

L'exemple 2 est analogue à l'exemple 1 sauf que, après le traitement de 24 h à 250°C pour figer la structure du substrat, on densifie directement le substrat avec une résine phénolique.
Dans cet exemple, on a donc supprimé une étape de carbonisation à 900°C du mat en fibre polyacrylonitrile à l'état réticulé, cette carbonisation étant réalisée durant la carbonisation de la résine phénolique.
Après imprégnation avec la résine pénolique et réticulation, la densité apparente est de 0,96 et la perméabilité est comprise entre 130 et 180 cm³/cm².s.bar. Après carbonisation à 900°C, on obtient un support de 0,90 de densité apparente et de 250 cm³/cm².s.bar de perméabilité et de diamètre poreux (diamètre 1er pore) compris entre 34 et 43 $\mu$m.
L'état de la surface a été caractérisé par sa rugosité :

$$R_T = 30 - 40 \ \mu m \ et \ R_A = 4 - 5 \ \mu m$$

La figure 2 est une microphotographie d'une coupe perpendiculairement au support obtenu selon cet exemple

Exemple 3

On a réalisé un essai témoin selon l'art antérieur décrit dans le FR 2 582 956, en partant non pas de mat, comme dans l'invention, mais de tissu en fibre de carbone.
On a imprégné, avec la résine phénolique utilisée dans les deux exemples précédents, un tissu à 300 g/m² en fibres de carbone. Après carbonisation à 900°C, on obtient un support de densité 1 et ayant une perméabilité de 10 cm³/cm².s.bar et un diamètre poreux (diamètre 1er pore) compris entre 12 et 26 $\mu$m.
L'état de la surface a été caractérisé par sa rugosité :

$$R_T = 50 - 60 \ \mu m \ et \ R_A = 6 - 8 \ \mu m$$

La figure 3 est une microphotographie d'une coupe, perpendiculairement au support obtenu selon cet exemple.

**Revendications**

1. Support de membrane utilisable pour les techniques séparatives, constitué d'un matériau composite carbone-carbone, de faible épaisseur selon la direction (Z) de passage du flux à traiter, solide mécaniquement, d'une texture poreuse appropriée à la membrane, comprenant un substrat fibreux et une matrice carbonée poreuse, et caractérisé en ce que, le substrat fibreux est un mat de fibres de carbone, constitué de segments de fibres de carbone contenus dans un plan perpendiculaire à la direction (Z) de passage du flux à traiter et orientés aléatoirement dans ce plan, ces fibres occupant entre 15 et 55% du volume total, et en ce que la densité apparente finale du support de membrane est comprise entre 0,7 et 1,2.

2. Support de membrane selon la revendication 1 caractérisé en ce que les fibres occupent entre 25 et 45% du volume total.

3. Support de membrane selon une quelconque des revendications 1 et 2 dans lequel la longueur moyenne desdits segments de fibre de carbone est comprise entre 1 et 100 mm.

4. Support de membrane selon la revendicatin 3 caractérisé en ce que la longueur moyenne desdits segments de fibre de carbone est comprise entre 20 et 80 mm.

5. Support de membrane selon l'une des revendications 1 à 4 caractérisé en ce qu'une fraction du support destinée à être en contact avec la membrane contient une dispersion de poudre(s) inerte(s) dont la taille particulaire moyenne est comprise entre 0,1 et 10 $\mu$m.

6. Support de membrane selon la revendication 5 dans lequel ladite poudre est choisie parmi des poudres de fibres de carbone, de fibres de verre, de carbures de silicium.

7. Support de membrane selon une quelconque des revendications 1 à 6 dans lequel le substrat fibreux est obtenu à partir d'un mat aiguilleté.

8. Procédé de fabrication d'un support de membrane selon une quelconque des revendications 1 à 7 caractérisé en ce qu'il comporte les étapes suivantes :
   a) on positionne, sur un support ayant la forme requise mais non-adhérent au mat, du mat de fibre de carbone, et on empile une ou plusieurs couches de mat en fonction de l'épaisseur finale souhaitée;
   b) on soumet le mat à une compression de manière à obtenir une densité apparente comprise entre 0,2 et 0,6, on le porte à une température comprise entre 100 et 300°C, et on le maintient à cette température de 1 à 50 heures, de manière à obtenir un substrat à structure figée;
   c) on densifie le substrat ainsi obtenu par une ou plusieurs imprégnations de résine suivies de carbonisation , par dépôt chimique de C en phase vapeur, ou par une combinaison de ces deux méthodes, la densité apparente finale du support poreux en matériau composite étant comprise entre 0,7 et 1,2.

9. Procédé de fabrication d'un support de membrane selon la revendication 8 caractérisé en ce qu'entre les opérations b) et c), on soumet le mat comprimé à structure figée à un traitement de carbonisation à 900°C.

10. Procédé de fabrication d'un support de membrane selon l'une des revendications 8 ou 9 caractérisé en ce que lors de l'opération a) on dispose une ou plusieurs couches de charge de poudres inertes de tailles particulaire moyenne comprise entre 0,1 et 10 $\mu$m entre (ou sur) les couches de mat.

11. Procédé selon l'une des revendications 8 à 10 dans lequel, en vue de fabriquer un support plan, on comprime le mat entre les plateaux d'une presse avec des intercalaires en graphite munis de cales pour obtenir un support d'épaisseur prédéterminée.

12. Procédé selon l'une des revendications 8 à 10 dans lequel on comprime le mat par compression isostatique en plaçant le mat et son support de forme quelconque dans un emballage souple et étanche aux fluides.

13. Utilisation d'un support de membrane selon une quelconque des revendications 1 à 7 comme support de membrane minérale.

14. Utilisation d'un support de membrane selon l'une des revendications 5 à 7 et fabriqué selon la revendication 10 comme élément filtrant sans adjonction de membrane.

**Claims**

1. A membrane support which can be used for separative procedures, constituted by a mechanically solid composite carbon-carbon material, of small thickness in the passage direction (Z) of the flow to be treated, having a porous texture appropriate for the membrane, comprising a fibrous substrate and a porous carbonaceous matrix, and characterised in that the fibrous substrate is a carbon fibre mat constituted by segments of carbon fibres contained in a plane which is perpendicular to the passage direction (Z) of the flow to be treated and randomly oriented in that plane, these fibres occupying between 15 and 55% of the total volume, and in that the final apparent density of the membrane support is between 0.7 and 1.2.

2. A membrane support according to Claim 1, characterised in that the fibres occupy between 25 and 45% of the total volume.

3. A membrane support according to either of Claims 1 or 2, wherein the average length of said carbon fibre segments is between 1 and 100 mm.

4. A membrane support according to Claim 3, characterised in that the average length of said carbon fibre segments is between 20 and 80 mm.

5. A membrane support according to one of Claims 1 to 4, characterised in that a fraction of the support intended to be in contact with the membrane contains a dispersion of inert powder(s) with an average particle size of between 0.1 and 10 $\mu$m.

6. A membrane support according to Claim 5 in which said powder is selected from carbon fibre powders, glass fibre powders, silicon carbide powders.

7. A membrane support according to any one of Claims 1 to 6 in which the fibrous substrate is obtained from a needled mat.

8. A process for the production of a membrane support according to any one of Claims 1 to 7, characterised in that it comprises the following stages:
    a) a carbon fibre mat is positioned on a support having the requisite shape but which does not adhere to the mat, and one or a plurality of mat layers is stacked as a function of the final thickness desired;
    b) the mat undergoes compression in such a way as to obtain an apparent density of between 0.2 and 0.6, and it is brought to a temperature of between 100 and 300 °C, and it is kept at that temperature for 1 to 50 hours in order to obtain a substrate with a consolidated structure;

c) the substrate thus obtained is densified by one or more impregnations with resin followed by carbonization, by chemical deposition of C in vapour phase, or by a combination of these two methods, the apparent final density of the composite material porous support being between 0.7 and 1.2.

9. A process for the production of a membrane support according to Claim 8, characterised in that between stages b) and c) the compressed mat of consolidated structure is subjected to a carbonization treatment at 900 °C.

10. A process for the production of a membrane support according to one of Claims 8 or 9, characterised in that during stage a) one or a plurality of layer(s) of a charge of inert powders with an average particle size of between 0.1 and 10 $\mu$m is/are deposited between (or on) the mat layers.

11. A process according to one of Claims 8 to 10, wherein, with a view to producing a planar support, the mat is compressed between the platens of a press with intercalated graphite layers, equipped with shims in order to obtain a support of a predetermined thickness.

12. A process according to one of Claims 8 to 10, wherein the mat is compressed by isostatic compression by being placed together with its support of any shape in a flexible, fluid-tight enclosure.

13. Use of a membrane support according to any one of Claims 1 to 7 as a mineral membrane support.

14. Use of a membrane support according to one of Claims 5 to 7 and produced according to Claim 10 as a filtering element and without the addition of a membrane.

**Patentansprüche**

1. Membranträger, der für Trennverfahren verwendbar ist und aus einem Kohlenstoff-Kohlenstoff-Verbundmaterial besteht, der in Strömungsrichtung (Z) des zu behandelnden Stroms eine geringe Stärke aufweist, mechanisch fest ist und eine für die Membran geeignete poröse Struktur hat, der ein faseriges Substrat und eine poröse kohlenstoffhaltige Matrix umfaßt und dadurch gekennzeichnet ist, daß das faserige Substrat eine Kohlenstofffasermatte ist, die aus Kohlenstofffasersegmenten

besteht, die auf einer zu der Strömungsrichtung (Z) des zu behandelnden Stroms senkrechten Ebene enthalten und beliebig auf dieser Ebene ausgerichtet sind, wobei diese Fasern 15 bis 55 % des Gesamtvolumens einnehmen, und dadurch, daß die beobachtete Enddichte des Membranträgers 0,7 bis 1,2 beträgt.

2.  Membranträger nach Anspruch 1, dadurch gekennzeichnet, daß die Fasern 25 bis 45 % des Gesamtvolumens einnehmen.

3.  Membranträger nach einem der Ansprüche 1 und 2, bei dem die durchschnittliche Länge der Kohlenstoffasersegmente 1 bis 100 mm beträgt.

4.  Membranträger nach Anspruch 3, dadurch gekennzeichnet, daß die durchschnittliche Länge der Kohlenstoffasersegmente 20 bis 80 mm beträgt.

5.  Membranträger nach einem der Ansprüche 1 bis 4, dadurch gekennzeichnet, daß ein Teil des Trägers, der in Kontakt mit der Membran kommen soll, eine Dispersion aus inertem/n Pulver/n enthält, dessen/deren mittlere Partikelgröße 0,1 bis 10 $\mu$m beträgt.

6.  Membranträger nach Anspruch 5, bei dem das Pulver aus Pulvern aus Kohlenstoffaser, Glasfaser, Siliziumkarbid ausgewählt ist.

7.  Membranträger nach einem der Ansprüche 1 bis 6, bei dem das faserige Substrat aus einer genadelten Matte erhalten wird.

8.  Herstellungsverfahren für einen Membranträger nach einem der Ansprüche 1 bis 7, dadurch gekennzeichnet, daß es folgende Schritte umfaßt:
    a) man positioniert Kohlenstoffasermatte auf einem Träger, der die erforderliche Form hat, aber nicht an der Matte haftet, und stapelt je nach gewünschter Endstärke eine oder mehrere Mattenschichten übereinander;
    b) man preßt die Matte in der Weise zusammen, daß man eine scheinbare Dichte von 0,2 bis 0,6 erhält, bringt sie auf eine Temperatur von 100 bis 300°C und hält sie 1 bis 50 Stunden auf dieser Temperatur, um ein Substrat mit fester Struktur zu erhalten;
    c) man verdichtet das so erhaltene Substrat durch eine oder mehrere Harzimprägnierungen mit anschließender Karbonisation, durch chemische Oberflächenbehandlung mit C in Dampfphase oder durch eine Kombination dieser beiden Methoden, wobei die scheinbare Enddichte des porösen Trägers aus Verbundmaterial 0,7 bis 1,2 beträgt.

9.  Herstellungsverfahren für einen Membranträger nach Anspruch 8, dadurch gekennzeichnet, daß man die gepreßte Matte mit fester Struktur zwischen den Schritten b) und c) einer Karbonisationsbehandlung auf 900°C unterzieht.

10. Herstellungsverfahren für einen Membranträger nach einem der Ansprüche 8 oder 9, dadurch gekennzeichnet, daß man beim Schritt a) eine oder mehrere Schichten Füllstoff aus inerten Pulvern mit mittlerer Partikelgröße von 0,1 bis 10 $\mu$m zwischen (oder auf) den Mattenschichten vorsieht.

11. Verfahren nach einem der Ansprüche 8 bis 10, bei dem man die Matte mit Hinblick auf die Herstellung eines ebenen Trägers zwischen den Scheiben einer Presse mit Auflageschichten aus Graphit, die mit Keilstücken versehen sind, zusammenpreßt, um einen Träger vorbestimmter Stärke zu erhalten.

12. Verfahren nach einem der Ansprüche 8 bis 10, bei dem man die Matte durch isostatisches Pressen zusammenpreßt, indem man die Matte und ihren Träger beliebiger Form in einer elastischen und fluiddichten Hülle vorsieht.

13. Verwendung eines Membranträgers nach einem der Ansprüche 1 bis 7 als Mineralmembranträger.

14. Verwendung eines Membranträgers nach einem der Ansprüche 5 bis 7 und als Filterelement ohne Zufügung einer Membrane nach Anspruch 10 hergestellt.

FIG. **1**

FIG. 2

200 μm

FIG. 3

FIG. **4** a

FIG. **4** b